# EUROPEAN PATENT SPECIFICATION

(11) **EP 4 703 837 B1**
(45) Date of publication and mention of the grant of the patent: **23.09.2026**
(21) Application number: 25198326.8
(22) Date of filing: 27.08.2025
(51) Int. Cl.: G05D 1/606, G05D 1/661, G05D 109/30, G05D 107/80, G05D 101/10, G05D 105/22, G05D 1/43, B63H 25/42, B63B 79/20

(54) **SYSTEM AND METHOD FOR STEERING CONTROL STABILIZATION OF A MARINE VESSEL**
SYSTEM UND VERFAHREN DARIN ZUR LENKSTEUERUNGSSTABILISIERUNG EINES WASSERFAHRZEUGS
SYSTÈME ET PROCÉDÉ ASSOCIÉ POUR LA STABILISATION DE COMMANDE DE DIRECTION D'UN NAVIRE DE SURFACE

(30) Priority: 29.08.2024 EP 24197423
(43) Date of publication of application: 04.03.2026
(73) Proprietor: CPAC Systems AB, 401 23 Göteborg (SE)
(72) Inventor: LUND, Erik, 534 34 Vara (SE)
(74) Representative: Zacco Sweden AB

(56) References cited:
- US-A1- 2020 140 052
- KALLSTROM C G ET AL: "Dynamic compensation system Ýships", CONTROL APPLICATIONS, 1994., PROCEEDINGS OF THE THIRD IEEE CONFERENCE ON GLASGOW, UK 24-26 AUG. 1994, NEW YORK, NY, USA,IEEE, 24 August 1994 (1994-08-24), pages 1093 - 1098, XP010130954, ISBN: 978-0-7803-1872-4, DOI: 10.1109/CCA.1994.381362

## Description

### TECHNICAL FIELD

The disclosure relates generally to steering control of a marine vessel. In particular aspects, the disclosure relates to a system and a method for steering control stabilization of a marine vessel. According to further aspects, the disclosure also relates to a computer program product and a computer readable storage medium, as well as, a marine vessel comprising the system.

### BACKGROUND

In modern marine vessels, it is common to have some form of automated docking assistance system in order to assist an operator of the marine vessel when docking the marine vessel. These type of automated docking assistance system are commonly referred to as Assisted Docking, AD, or Dynamic Positioning System, DPS. When activated, these automated docking assistance systems normally operate and control the drive system of the marine vessel with the goal of keeping the marine vessel fixed at a certain location, this while allowing the operator of the marine vessel to indicate via steering controls, such as, e.g. a joystick control, a direction in which the marine vessel is to be propelled. In this way, the marine vessel is both controlled by the automated docking assistance system and the operator of the marine vessel.

In some cases, the automated docking assistance system may be arranged to activate/de-active itself based on the movement of the steering controls, e.g. when a joystick control is moved in a combination of two or more axis-directions. This may, for example, be performed by an operator of the marine vessel in order to compensate for current wind conditions or misalignment with the dock. Unfortunately, this may result in that once the automated docking assistance system activates itself again, it may be unaware of the current wind conditions and thus it may take a while before it starts to compensate for the new position. This delay may cause the operator of the marine vessel to again move the joystick to compensate before the automated docking assistance system does. This can result in an undesired "tug-of-war" between the automated docking assistance system and the operator of the marine vessel.

Furthermore, in some cases, movement of the joystick in a one-axis direction by the operator of the marine vessel may be proportional to a velocity. This may cause the automated docking assistance system to attempt to reach this velocity as fast as possible, which may cause a quite aggressive acceleration. This in turn may cause the operator of the marine vessel to move the joystick back in the opposite direction, which cause a braking of the marine vessel. In response to the braking, the operator of the marine vessel may move the joystick again in the first direction. This oscillation of compensating movements caused by the interaction between the automated docking assistance system and the operator of the marine vessel is also not particularly desired.

Hence, there is a need to improve the steering control of marine vessels.

### SUMMARY

According to a first aspect of examples herein, a system for steering control stabilization of a marine vessel is provided. The system comprising a steering control device, a control unit and a model simulation device. The steering control device is arranged to provide control signals in response to manual control inputs from an operator of the marine vessel to the model simulation device. The model simulation device is arranged to apply the control signals generated by the steering control device to a simulated model of a marine vessel and provide a resulting position and heading, and their respective rate of change, of the simulated model of the marine vessel to the control unit. The control unit is arranged to control a propulsion system of the marine vessel based on a difference between a real-time current position and heading, and their respective rate of change, of the marine vessel and the resulting position and heading, and their respective rate of change, of the simulated model of the marine vessel provided by the model simulation device.

The first aspect of the disclosure may seek to improve the steering control of marine vessels. A technical benefit may include an increased operator-friendliness of the steering controls and that the operator of the marine vessel will experience a smoother and more stable behaviour of the marine vessel when controlling the marine vessel during docking. undesired "tug-of-war" between the automated docking assistance system and the operator of the marine vessel.

Furthermore, in some cases, movement of the joystick in a one-axis direction by the operator of the marine vessel may be proportional to a velocity. This may cause the automated docking assistance system to attempt to reach this velocity as fast as possible, which may cause a quite aggressive acceleration. This in turn may cause the operator of the marine vessel to move the joystick back in the opposite direction, which cause a braking of the marine vessel. In response to the braking, the operator of the marine vessel may move the joystick again in the first direction. This oscillation of compensating movements caused by the interaction between the automated docking assistance system and the operator of the marine vessel is also not particularly desired.

Hence, there is a need to improve the steering control of marine vessels.

US2020140052A1 discloses a method for controlling low-speed propulsion of a marine vessel powered by a marine propulsion system having a plurality of propulsion devices includes receiving a signal indicating a position of a manually operable input device movable to indicate desired vessel movement within three degrees of freedom, and associating the position of the manually operable input device with a desired inertial velocity of the marine vessel. A steering position command and an engine command are then determined for each of the plurality of propulsion devices based on the desired inertial velocity and the propulsion system is controlled accordingly. An actual velocity of the marine vessel is measured and a difference between the desired inertial velocity and the actual velocity is determined, where the difference is used as feedback in subsequent steering position command and engine command determinations.

KALLSTROM C G ET AL: "Dynamic compensation system", CONTROL APPLICATIONS, 1994, PROCEEDINGS OF THE THIRD IEEE CONFERENCE ON GLASGOW, UK 24-26 AUG. 1994, NEW YORK, NY, USA,IEEE, 24 August 1994, pages 1093-1098, XP010130954, DOI: 10.1109/CCA.1994.381362, ISBN: 978-0-7803-1872-4 discloses a Dynamic Compensation system (DC-system) which is used as an extension of the KaMeWa polar joystick system, where the horizontal motions of a ship are controlled by main propellers, rudders and bow thrusters. The DC-system acts like a compensator for wind and current disturbances, allowing the joystick operator to run the ship in almost all weather conditions as if the weather always is calm. The DC-system generates additional joystick commands, which are superimposed on the commands from the joystick operator.

### SUMMARY

According to a first aspect of examples herein, a system for steering control stabilization of a marine vessel is provided. The system comprising a steering control device, a control unit and a model simulation device. The steering control device is arranged to provide control signals in response to manual control inputs from an operator of the marine vessel to the model simulation device. The model simulation device is arranged to apply the control signals generated by the steering control device to a simulated model of a marine vessel and provide a resulting position and heading, and their respective rate of change, of the simulated model of the marine vessel to the control unit. The control unit is arranged to control a propulsion system of the marine vessel based on a difference between a real-time current position and heading, and their respective rate of change, of the marine vessel and the resulting position and heading, and their respective rate of change, of the simulated model of the marine vessel provided by the model simulation device.

The first aspect of the disclosure may seek to improve the steering control of marine vessels. A technical benefit may include an increased operator-friendliness of the steering controls and that the operator of the marine vessel will experience a smoother and more stable behaviour of the marine vessel when controlling the marine vessel during docking.

Optionally in some examples, including in at least one preferred example, the model simulation device may be arranged to apply the real-time current position and heading, and their respective rate of change, of the marine vessel as input when applying subsequent control signals to the simulated model of the marine vessel. Here, a technical benefit may include that the simulated model of the marine vessel will be continuously fed with and able to consider the real-time current position and heading, and their respective rate of change, of the marine vessel. This ensures that the actual position and heading, and their respective rate of change, of the marine vessel is synchronized with the position and heading, and their respective rate of change, of the simulated model of the marine vessel.

Optionally in some examples, including in at least one preferred example, the model simulation device may be arranged to apply the resulting position and heading, and their respective rate of change, of the simulated model of the marine vessel as input when applying subsequent control signals to the simulated model of the marine vessel. Here, a technical benefit may include that the resulting position and heading, and their respective rate of change, of the simulated model of the marine vessel may be correlated with the actual position and heading, and their respective rate of change, of the marine vessel, and thus be used to confirm model accuracy.

Optionally in some examples, including in at least one preferred example, the model simulation device may be arranged to simulate ideal operating conditions for the simulated model of the marine vessel when applying the control signals to the simulated model of the marine vessel. Here, a technical benefit may include that the simulated model of the marine vessel may be simulated without e.g. any wind, waves or sea drift, affecting the simulated model of the marine vessel, the actual marine vessel may be made to act in a manner as it would in case there was no disturbances, i.e. as if there was no wind, waves or current. Here, optionally in some examples, including in at least one preferred example, the method comprises the simulated ideal operating conditions for the marine vessel comprise that the marine vessel is simulated as not subjected to any wind, waves or sea drift.

Optionally in some examples, including in at least one preferred example, in case no control signals is provided to the model simulation device, the model simulation device may be arranged to simulate the model of a marine vessel assuming that the rate of changes of the position and heading for the simulated model of the marine vessel is null. Here, a technical benefit may include that the simulated model of the marine vessel is not being effected by the current measurements of the marine vessel when the velocity of the marine vessel is close to or equal to zero, i.e. the measured position, heading and their rate of change is not used at input to the simulated model of the marine vessel which instead use its previous position, heading and rate of changes.

Optionally in some examples, including in at least one preferred example, the control unit may be arranged to further operate in a first or second additional operating modes, and the steering control device may comprise a control device arranged to switch the control unit from operating in different operating modes. Here, a technical benefit may include that the operator of marine vessel easily may switch between different modes of operation during docking.

Optionally in some examples, including in at least one preferred example, in a first additional operating mode, the control unit is arranged to receive the control signals from the steering control device and control the propulsion or drive system of the marine vessel based on the received control signals. Here, a technical benefit may include that the operator of marine vessel easily may switch to a normal docking procedure in which he has direct control over the propulsion or drive system of the marine vessel through the steering control device.

Optionally in some examples, including in at least one preferred example, in a second additional operating mode, the control unit is arranged to control the propulsion or drive system of the marine vessel based on a difference between a desired set position and heading, and their respective rate of change, of the marine vessel and a real-time current position and heading, and their respective rate of change, of the marine vessel. Here, a technical benefit may include that the operator of marine vessel easily may switch to a mode in which the marine vessel is automatically controlled to stay in one place, e.g. setting a set point around which the marine vessel will be controlled, without involving a simulated model of the marine vessel.

Optionally in some examples, including in at least one preferred example, the steering control device may comprise a main control device and a secondary control device, wherein the secondary control device is arranged to receive manual control inputs from an operator of the marine vessel. Here, a technical benefit may include that the secondary control device may be more easily and flexibly be implemented on the marine vessel by, for example, being connected to an pre-existing main control device of the marine vessel.

Optionally in some examples, including in at least one preferred example, the secondary control device comprise one or more joysticks. Here, a technical benefit may include that the desired movements in which an operator intends to steer the marine vessel is easily imitated or reflected in the possible joystick movements, e.g. in two- or three dimensions, and thus provide an intuitive and operator-friendly operator interface.

Optionally in some examples, including in at least one preferred example, said control signals indicate a movement (e.g. of said joystick) in an x-direction equal to a force in x, a movement (e.g. of said joystick) in a y-direction equal to a force in y, and a movement (e.g. of said joystick) about z-direction equal to a moment in z.

According to a second aspect of examples herein, a method in a system for steering control stabilization of a marine vessel is provided. The system comprises a steering control device, a control unit and a model simulation device. The method comprises providing, by the steering control device, control signals in response to manual control inputs from an operator of the marine vessel to the model simulation device. The method also comprises applying, by the model simulation device, the control signals generated by the steering control device to a simulated model of a marine vessel. The method further comprises providing, by the model simulation device, a resulting position and heading, and their respective rate of change, of the simulated model of the marine vessel to the control unit. Furthermore, the method comprises controlling, by the control unit, a propulsion system of the marine vessel based on a difference between a real-time current position and heading, and their respective rate of change, of the marine vessel and the resulting position and heading, and their respective rate of change, of the simulated model of the marine vessel provided by the model simulation device.

Optionally in some examples, including in at least one preferred example, the method comprises, when no control signals is provided to the model simulation device, simulating, by the model simulation device, the marine vessel assuming the rate of change of the position and heading for the simulated model of the marine vessel is null.

Optionally in some examples, including in at least one preferred example, said control signals indicate a movement (e.g. of the aforementioned joystick) in an x-direction equal to a force in x, a movement (e.g. of the aforementioned joystick) in a y-direction equal to a force in y, and a movement (e.g. of the aforementioned joystick) about z-direction equal to a moment in z.

According to a third aspect of examples herein, a computer program product comprising program code for performing, when executed by processing circuitry of the control unit, the method as described above is disclosed.

According to a fourth aspect of examples herein, a non-transitory computer-readable storage medium comprising instructions, which when executed by the processing circuitry, cause the processing circuitry to perform the method as described above is disclosed.

The above aspects, accompanying claims, and/or examples disclosed herein above and later below may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Features and advantages of the examples will become readily apparent to those skilled in the art by the following detailed description of exemplary examples thereof with reference to the accompanying drawings, wherein:
**FIG. 1** shows an example marine vessel with a marine drive system.
**FIG. 2** schematically shows an example of a system for steering control stabilization.
**FIG. 3A** illustrate an example of a steering control operable in three dimensions.
**FIG. 3B** illustrate an example of a steering control operable in two dimensions.
**FIG. 4** shows an illustrative example of the steering control stabilization and an operator user interface.
**FIG. 5** is a flowchart depicting examples of a method for steering control stabilization of a marine vessel.
**FIG. 6** is a schematic illustration of an example computer system.

### DETAILED DESCRIPTION

Aspects set forth below represent the necessary information to enable those skilled in the art to practice the disclosure.

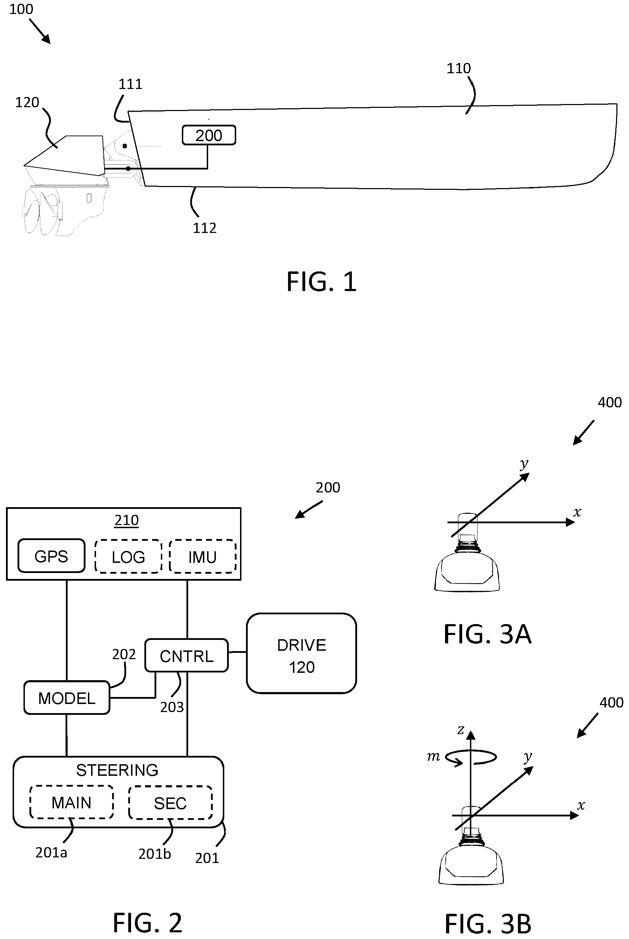

**FIG. 1** illustrate an example **marine vessel 100.** It should be noted that the teachings herein can be applied to various types of marine vessels, including vessels with more than one hull. The marine vessel 100 comprise a **hull 110** that extend in a longitudinal direction. The front of the vessel is referred to as the fore or bow of the marine vessel 100 while the rear of the vessel is referred to as the stern or aft. Some vessels comprise a **transom 111,** which is the aft transverse surface of the hull that forms the stern of a vessel. The hull 110 has a **bottom surface 112,** which may vary widely in shape between vessels.

The marine vessel 100 may comprise a **marine drive system 120, 200.** However, it should be noted that the marine vessel 100 does not have to be provided with a drive system as shown in Fig. 1. The marine vessel 100 may instead, for example, comprise an Integrated Propulsion System, IPS. However, the marine vessel 100 may also be any marine vessel with a straight axle and stern and bow thrusters, or optionally some kind of 360°-rotatable pod thruster. In fact, the propulsion type of the marine vessel 100 is of less importance to the embodiments presented herein, since the propulsion is basically only required to be able to produce thrust in each axis independent of each other.

According to one example, the marine drive system 120, 200 may comprise **a propulsion or drive system 120** and an **on-board control system 200.** Some parts of the propulsion or drive systems 120 of the marine vessel 100 may be mounted to the transom 111 of the hull 110, while other part of the propulsion or drive systems 120 may extend out from the bottom 112 of the hull 110 in different suitable directions. These types of propulsion or drive systems on a marine vessel are known and thus will not be discussed in more detail herein for the marine vessel 100. The on-board control system 200, or system, is connected to the propulsion or drive systems 120 of the marine vessel 100. The on-board control system 200 is also arranged to control the propulsion or drive systems 120 of the marine vessel 100.

**FIG. 2** shows an example of an on-board control system 200 for steering control stabilization, in particular during docking. The on-board control system 200 may comprise a **steering control device 201, a model simulation device 202,** and a **control unit 203.** Furthermore, according to some examples herein, the on-board control system 200 may also comprise a **motion sensor system 210.**

The steering control device 201 is arranged to provide control signals to the model simulation device 202. The steering control device 201 is arranged to generate the control signals based on manual control inputs from an operator of the marine vessel 100. This means, for example, that the maneuvers made by an operator of the marine vessel 100 to the steering control device 201 may be transmitted to the model simulation device 202. During normal operation of the marine vessel 100, the steering control device 201 may also arranged to provide the control signals to the control unit 203.

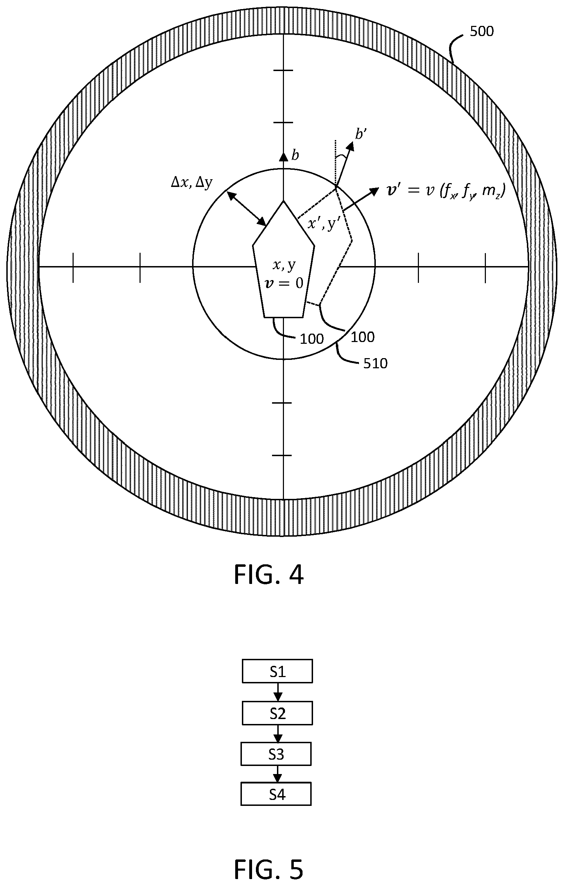

The steering control device 201 may comprise a main control device 201a and a secondary control device 201b; both arranged to receive manual control inputs from an operator of the marine vessel 100. The main control device 201a may, for example, comprise a steering wheel and a throttle lever, while the second control device 201b may comprise one or more joysticks and/or buttons. It should here be noted that the one or more joysticks of the second control device 201b may provide an operator of the marine vessel 100 the possibility of controlling the marine vessel 100 with at least two (2) or three (3) degrees of freedom. This is exemplified and illustrated in **FIG. 3A** and **FIG. 3B****,** respectively. It should further be noted that the second control device 201b may also be integrated in a Graphical User Interface, GUI 500 (e.g. as described below with reference to FIG. 4). According to one example, the one or more joysticks and/or button may also be virtual joysticks and/or buttons to be interacted with by the operator of the marine vessel 100 via the GUI 500.

The model simulation device 202 is arranged to receive the control signals from the steering control device 201. The model simulation device 202 is further arranged to apply the received control signals generated by the steering control device 201 to a simulated model of a marine vessel 100. It should here be noted that the marine vessel 100 may be modelled and its movements simulated in numerous different ways. Therefore, it should also be noted that even if only some examples of a simulated model of the marine vessel 100 is given below, this should not be construed as limiting the scope of the invention to these explicit examples.

According to one example, the steering control device 201 may provide control signals to the model simulation device 202 that indicate a movement in an x-direction equal to a force in x, *fₓ,* a movement in a *y*-direction equal to a force in y, *f_{y},* and/or a movement about z-direction (i.e. change in heading) equal to a moment in z, *m_{z},* in case of the steering control device 201 being capable of providing three degrees of freedom, as illustrated in FIG. 3B. However, in case of the steering control device 201 only being capable of providing two degrees of freedom, the movement in z equal to a moment in z, *m_{z},* may e.g. be excluded as illustrated in FIG. 3A. The model simulation device 202 may then apply these forces *fₓ, f_{y},* m_{z} to a simulated model of the marine vessel 100. Optionally, it should be noted that the simulated model of the marine vessel 100 does not necessarily have to be simulated model of the actual marine vessel 100, but may also be a simulated model of a similar or representative marine vessel. The simulated model of the marine vessel 100 by the model simulation device 202 may correspondingly also be configured with two or three degrees of freedom depending on the capability of the steering control device 201.

A simple example of a simulated model of the marine vessel 100 by the model simulation device 202 may be a mass damper model as described by Eq. 1-3 shown below: ${x}^{¨} = \frac{{f}_{x}}{m} - \frac{{d}_{x} {\dot{x}}^{2}}{m} sign \left(\dot{x}\right)$ ${y}^{¨} = \frac{{f}_{y}}{m} - \frac{{d}_{y} {\dot{y}}^{2}}{m} sign \left(\dot{y}\right)$ ${z}^{¨} = \frac{{m}_{z}}{I} - \frac{{d}_{z} {\dot{z}}^{2}}{I} sign \left(\dot{z}\right)$

In the simulated model of the marine vessel 100 as described by Eq. 1-3 above:
*ẍ* and *ÿ* denotes the linear acceleration of the simulated model of the marine vessel 100 in the *x-* and *y*-directions,
*ẋ* and *ẏ* denotes the velocity of the simulated model of the marine vessel 100 in the x- and y-directions,
m denotes the mass of the simulated model of the marine vessel 100,
*dₓ* and *d_{y}* are summed-up constants of the drag equation,
*sign* is a function which returns the sign of the input,
*z̈* denotes the angular acceleration about the z-direction, i.e. bearing or heading,
*ż* denotes the angular velocity about the z-direction, i.e. bearing or heading,
I denotes the inertia of the simulated model of the marine vessel 100,and
*d_{z}* denoted constants in the drag equation for rotational movements.

Here, it should be noted that the constants *dₓ , d_{y},* and *d_{z}* may apply under the assumption that changes in the velocities *ẋ, ẏ,* and *ż* are below certain thresholds, i.e. the velocities are relatively small. This is normally the case during docking. Furthermore, it should also be noted that an even simpler linear model may be used for the simulated model of the marine vessel 100 by the model simulation device 202 in case it may be assumed that the velocities *ẋ, ẏ,* and *ż* are close to or equal to zero. In this case, the sign function and the square of the velocities (rotational rates) in the mass damper model as described by Eq. 1-3 may simply be removed.

By using the equations Eq. 1-3 for the simulated model of the marine vessel 100, the model simulation device 202 may thus determine a next position, velocities and heading that the control unit 203 may get as an input. This may, for example, be performed by the model simulation device 202 by solving the equations Eq. 1-3 for a time-step *dt.* Here, the time-step *dt* may preferably be similar to the frequency of a control loop applied by the control unit 201 for controlling the propulsion or drive systems 120 of the marine vessel 100. Hence, the model simulation device 202 may be arranged to solving the equations Eq. 1-3 each time the control algorithm in the control unit 201 is executed and run. Thus, the model simulation device 202 is arranged to provide a resulting position and heading, and their respective rate of change, of the simulated model of the marine vessel 100 to the control unit 203. In other words, the model simulation device 202 may be arranged to apply the received control signals from the steering control device 201 to the simulated model of the marine vessel 100 in order to determine the position and heading, and their respective rate of change, of the simulated model of the marine vessel 100 resulting from applying the control signals from the steering control device 201 to the simulated model of the marine vessel 100. Then, the model simulation device 202 may be arranged to output the resulting position and heading, and their respective rate of change, of the simulated model of the marine vessel 100 to the control unit 203. Hence, the simulated marine vessel's position, velocities and heading may be used as the input to the control unit 203 in order to be used by the control unit 203 to regulate and steer the position of the actual marine vessel 100. Here, it should be noted that the term "rate of change" of the position and heading may refer to the velocities, speeds, and acceleration (i.e. the rate of change of the rate of change of the position and heading) of the simulated model of the marine vessel 100 or the actual marine vessel 100.

According to one example, the velocities *ẋ, ẏ,* and *ż* used by the simulated model of the marine vessel 100 may be the simulated velocity or the actual velocity of the marine vessel 100. In other words, the model simulation device 202 may be arranged to use the real-time current position and heading, and their respective rate of change, of the marine vessel 130 as input when applying subsequent control signals to the simulated model of the marine vessel 100. This means that that the simulated model of the marine vessel 100 will be continuously fed with and able to consider the real-time current position and heading, and their respective rate of change, of the marine vessel 100. This ensures that the actual position and heading, and their respective rate of change, of the marine vessel 100 is synchronized with the position and heading, and their respective rate of change, of the simulated model of the marine vessel 100. The real-time current position and heading, and their respective rate of change, of the marine vessel 130 may be provided to the model simulation device 202, for example, by the motion sensor system 210 described in more detail below. As an alternative, according to some examples, the model simulation device 202 may be arranged to use the resulting position and heading, and their respective rate of change, of the simulated model of the marine vessel 100 as input when applying subsequent control signals to the simulated model of the marine vessel 100. This means that the resulting position and heading, and their respective rate of change, of the simulated model of the marine vessel 100 may be correlated with the actual position and heading, and their respective rate of change, of the marine vessel 100, and thus be used to confirm model accuracy. In both these cases, it may also be advantageous by the model simulation device 202 to couple the simulated model of the marine vessel 100 to the real-time current position and heading of the marine vessel 100 such that the simulated model of the marine vessel 100 is not allowed to drift to far apart from the real-time current position and heading of the marine vessel 100. For example, a re-start of the simulated model of the marine vessel 100 based on the real-time current position and heading of the marine vessel 100 may be triggered in case the difference between the position and heading of the simulated model of the marine vessel 100 and the real-time current position and heading of the marine vessel 100 are above a predetermined threshold values. Optionally, the position and heading of the simulated model of the marine vessel 100 may be limited to not differ more than a particular range from the real-time current position and heading of the marine vessel 100. If they differ more, the position and heading of the simulated model of the marine vessel 100 may be changed to the maximum or minimum value of the particular range.

Additionally, according to some examples, when no control signals are received from the steering control device 201, e.g. no movement of the joystick by the operator of the marine vessel 100, the model simulation device 202 may run the simulated model of the marine vessel 100 in a so-called open loop, wherein the velocities *ẋ, ẏ,* and *ż* are close to or equal to 0. In other words, in case no control signals is provided to the model simulation device 202, the model simulation device 202 is arranged to simulate the model of a marine vessel 100 assuming the rate of change of the position and heading for the simulated model of the marine vessel 100 is null. Here, it should be noted that the idea is, if there is no joystick input and the rate of change in position (i.e. the speed of the marine vessel 100) is rather low, the model simulation will simulate how the marine vessel 100 "should" come to a stop and then keep that position. While there may initially be some rates of change, they should die out rather quick in this case. Then, the simulated marine vessel will be simulating a stand-still of the simulated marine vessel, whereby, at that point, the model simulation may e.g. stop running the model simulation of the marine vessel until some one moves the joystick (since the position and rates will be the same all the time).

According to some examples, the model simulation device 202 may be arranged to simulate ideal operating conditions for the simulated model of the marine vessel 100 when applying the control signals to the simulated model of the marine vessel 100. Here, the simulated ideal operating conditions for the marine vessel 100 comprise that the marine vessel 100 may be simulated as not subjected to any wind, waves or sea drift. This means that external factors affecting movement of the actual marine vessel 100 in real life may be disregarded by the simulated model of the marine vessel 100, and by simulating the marine vessel 100 similar to when the marine vessel 100 is being driven in perfect conditions, the actual marine vessel 100 may be made to act like there is no disturbance by the control unit 203.

Additionally, in some examples, the simulated model of the marine vessel 100 of the model simulation device 202 may use parameters that simulates that the marine vessel 100 is moving in a fluid with higher viscosity than water. This means that the simulated marine vessel 110 would move slower in response to the control signals from the steering control device 201. This may provide for a more controlled feeling of the movements of the marine vessel 100 to the operator of the marine vessel 110 while using the steering control device 201. It may also cause the marine vessel 100 to break when coming to a halt instead of gliding. Optionally, the simulated model of the marine vessel 100 of the model simulation device 202 may also involve parameters that reflect real-world characteristics of the actual marine vessel 100, such as, the real weight of the marine vessel 100 or a friction parameter accurately corresponding to the real friction of the marine vessel 100 in water.

The control unit 203 is arranged to receive the resulting position and heading, and their respective rate of change, of the simulated model of the marine vessel 100 from the model simulation device 202. Also, the control unit 203 is arranged to receive the real-time current position and heading, and their respective rate of change, of the marine vessel 100, e.g. from the motion sensor system 210 described in more detail below. Hence, the control unit 203 may be arranged to control the propulsion or drive system 120 of the marine vessel 100 based on a difference between a real-time current position and heading, and their respective rate of change, of the marine vessel 100 and the resulting position and heading, and their respective rate of change, of the simulated model of the marine vessel 100 provided by the model simulation device 202. Accordingly, the control unit 203 may operate in a regular operating mode wherein it uses the difference between the simulated position and velocity parameters from the simulated model of the marine vessel 100 and the real-time position and velocity parameters of the actual marine vessel 100 as a basis when applying its control signals to the propulsion or drive system 120 of the marine vessel 100. In other words, the control unit 203 may control the propulsion or drive system 120 of the marine vessel 100 proportionally to the difference between the simulated position and velocity parameters from the simulated model of the marine vessel 100 and the real-time position and velocity parameters of the actual marine vessel 100.

Advantageously, this means that the undesired "tug-of-war" between the control unit 203 and the operator of the marine vessel 100 as described above in the background may be avoided when docking the marine vessel 100. Also, the undesired oscillations of compensating movements also described in background above is less likely to occur when docking the marine vessel 100, since the marine vessel 100 will accelerate less instantaneously and try to keep a quite constant velocity, or RPM, the whole way though the docking procedure due to that it only compensates for the difference in position and velocity between the simulated model of the marine vessel 100 and the actual marine vessel 100.

According to some examples, the control unit 203 may be arranged to further operate in a first or second additional operating modes. In this case, the steering control device 201 comprise a control device, e.g. a switch or button, arranged to switch the control unit 203 from operating in different operating modes, e.g. switch the control unit 203 from operating in the regular operating mode to instead operate in the first or second additional operating modes.

In the first additional operating mode, the control unit 203 may be arranged to receive the control signals from the steering control device 201 and control the propulsion or drive systems 120 of the marine vessel 100 directly based on the received control signals from the steering control device 201. This may correspond to a normal operation or driving mode of the marine vessel 100.

In the second additional operating mode, the control unit 203 may be arranged to receive a desired set position and heading, and their respective rate of change, of the marine vessel 100, and control the propulsion or drive system 120 of the marine vessel 100 based on a difference between a desired set position and heading, and their respective rate of change, of the marine vessel 100 and a real-time current position and heading, and their respective rate of change, of the marine vessel 100. This may correspond to a conventional stay-in-place mode of the marine vessel 100, wherein the control unit 203 simply tries to maintain the current position and heading of the marine vessel 100. This may, for example, be illustrated in FIG. 4 by having the desired position of the marine vessel 100 set to the first position *x*, *y* with a heading *b* and a velocity *v* = 0. In this case, the marine vessel 100 may be considered to be located at the first position *x*, *y* in case a second position of the marine vessel 100 does not exceed *x + Δx, y + Δy,* e.g. the marine vessel 100 is kept within the **area 510** indicated on the user interface 500.

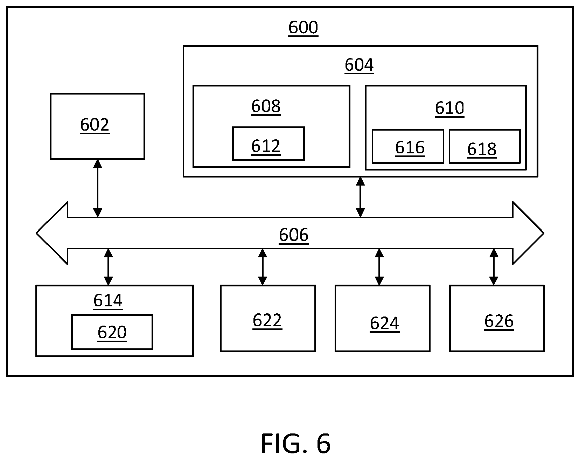

It should be noted that the control unit 203 may be a centralized control unit where processing takes place on processing circuitry located in the same place on the vessel, or a distributed control unit which comprises several spatially separated units of processing circuitry, forming a computer system. An example computer system 600 will be discussed in more detail below with reference to FIG. 6.

The motion sensor system 210 may comprise one or more sensors, possibly of different type. The purpose of the motion sensor system 210 is to sense motion of the marine vessel 100 relative to some reference coordinate system. The motion sensor system may comprise, e.g., one or more inertial measurement units (IMU), one or more speed logs, one or more global positioning system (GPS) receivers, one or more radar transceivers, etc. The motion sensor system 210 may be arranged to measure and determine, in real-time, the marine vessel's 100 current position and heading, and their respective rate of change. The motion sensor system 210 may be arranged to provide this information to the control unit 201 and the model simulation device 202. For example, it may be advantageous for the motion sensor system 210 to provide the model simulation device 202 with the marine vessel's 100 current position and heading, and their respective rate of change, upon starting up the steering control stabilization, e.g. switching to the regular operating mode during docking. This in order to achieve a smooth transition from the normal operation of the marine vessel 100 or any of the first or second additional operating modes.

**FIG. 4** illustrates an example of the simulated model of the marine vessel 100 in a first position *x*, *y* with a heading *b* and a velocity *v* = 0. Here, a control signal *fₓ, f_{y}, m_{z}* from steering control device 201 is then applied to the simulated model of the marine vessel 100 which results in the simulated model of the marine vessel 100 being moved to a second position *x', y'* having a velocity *v*' *= v* (*fₓ, f_{y}, m_{z}*). The applied control signal *fₓ, f_{y}, m_{z}* from the steering control device 201 may also result in a change in heading from *b* to *b'.* This may be illustrated to an operator of the marine vessel 200, for example, through a **graphical user interface (GUI) 500** as depicted in FIG. 4. Here, for example, the GUI 500 may comprise a touch-screen wherein the manual input from the operator of the marine vessel 100 is received by the operator pressing a finger or clicking on the on-screen representation of the simulated model of the marine vessel 100 and dragging the on-screen representation of the simulated model of the marine vessel 100 to a desired location. Alternatively, this may also be made by clicking on buttons, slide bars or virtual joysticks that may be implemented and presented as virtual elements in the GUI 500. In these cases, the GUI 500 may thus comprise the second control device 201b of the steering control device 201. Optionally, the GUI 500 may also be capable of visualizing an on-screen representation of the marine vessel 100 corresponding to the real position and movements of the marine vessel 100. This may provide a visual understanding to the operator of the marine vessel 100 of the correlation between the simulated model of the marine vessel 100 and the real position and movements of the marine vessel 100.

Examples of a method in a system 200 for steering control stabilization of a marine vessel 100, will now be described with reference to the flowchart depicted in **FIG. 5**. The system 200 comprising a steering control device 201, a control unit 203 and a model simulation device 202. FIG. 5 is an illustrated example of actions or operations which may be taken in the system 200, as described above, on-board the marine vessel 100. It should also be noted that some or all of the functionality described herein as being performed by the control unit 203 and/or the model simulation unit 203 may be provided by the computer system 600 and the processing circuitry 602 executing instructions stored on a computer-readable medium, such as, e.g., the memory 604 shown in Fig. 6. The method may comprise the following actions.

**Action S1.** The steering control device 201 may provide control signals in response to manual control inputs from an operator of the marine vessel 100 to the model simulation device 202. This means, for example, that the steering control device 201, normally used to provide the control signals to the control unit 203, may provide its control signals to the model simulation device 202.

**Action S2.** After receiving the control signals from the steering control device 201 in Action S1, the model simulation device 202 applies the control signals generated by the steering control device 201 to a simulated model of a marine vessel 100. This means, for example, that the received control signals from the steering control device 201 will be used to virtually steer the simulated model of the marine vessel 100, and to calculate and determine a new position, velocities and heading for the simulated model of the marine vessel 100 resulting from the received control signals. According to some examples, when no control signals is provided to the model simulation device 202, the model simulation device 202 may simulate the marine vessel 100 assuming the rate of change of the position and heading for the simulated model of the marine vessel 100 is null. This means, for example, that the simulated model of the marine vessel 100 may be executed to run in a open control loop when the velocity of the marine vessel 100 is close to zero.

**Action S3.** After applying the control signals to the simulated model of a marine vessel 100 in Action S2, the model simulation device 202 provides a resulting position and heading, and their respective rate of change, of the simulated model of the marine vessel 100 to the control unit 203.

**Action S4.** After receiving the resulting position and heading, and their respective rate of change, of the simulated model of the marine vessel 100 in Action S3, the control unit 110 controls a propulsion or drive system 120 of the marine vessel 100 based on a difference between a real-time current position and heading, and their respective rate of change, of the marine vessel 100 and the resulting position and heading, and their respective rate of change, of the simulated model of the marine vessel 100 provided by the model simulation device 202. This means, for example, that the propulsion or drive system 120 of the marine vessel 100 may be controlled proportionally to the difference between a real-time current position and heading, and their respective rate of change, of the marine vessel 100 and the resulting position and heading, and their respective rate of change, of the simulated model of the marine vessel 100 provided by the model simulation device 202.

**FIG. 6** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures, and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 420 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 420 can comprise software instructions for implementing the functionality of the examples described herein when executed by the processing circuitry 602. In some examples, the storage device 614 may be a computer program product (e.g., readable storage medium) storing the computer program 420 thereon, where at least a portion of a computer program 420 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 422 configured to receive input and selections to be communicated to the computer system 600 when executing instructions, such as from a keyboard, mouse, touch-sensitive surface, etc. Such input devices may be connected to the processing circuitry 602 through the input device interface 422 coupled to the system bus 606 but can be connected through other interfaces, such as a parallel port, an Institute of Electrical and Electronic Powertrainers (IEEE) 1394 serial port, a Universal Serial Bus (USB) port, an IR interface, and the like. The computer system 600 may include an output device interface 424 configured to forward output, such as to a display, a video display unit (e.g., a liquid crystal display (LCD) or a cathode ray tube (CRT)). The computer system 600 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A system (200) for steering control stabilization of a marine vessel (100), the system (200) comprising a steering control device (201), a model simulation device (202) and a control unit (203),
where the steering control device (201) is arranged to provide control signals in response to manual control inputs from an operator of the marine vessel (100) to the model simulation device (202),
**characterized in that** the model simulation device (202) is arranged to apply the control signals generated by the steering control device (201) to a simulated model of a marine vessel (100) and provide a resulting position and heading, and their respective rate of change, of the simulated model of the marine vessel (100) to the control unit (203),
where the control unit (203) is arranged to control a propulsion or drive system (120) of the marine vessel (100) based on a difference between a real-time current position and heading, and their respective rate of change, of the marine vessel (100) and the resulting position and heading, and their respective rate of change, of the simulated model of the marine vessel (100) provided by the model simulation device (202).

2. The system (200) according to claim 1, wherein the model simulation device (202) is arranged to use the real-time current position and heading, and their respective rate of change, of the marine vessel (100) as input when applying subsequent control signals to the simulated model of the marine vessel (100).

3. The system (200) according to claim 1 or 2, wherein the model simulation device (202) is arranged to use the resulting position and heading, and their respective rate of change, of the simulated model of the marine vessel (100) as input when applying subsequent control signals to the simulated model of the marine vessel (100).

4. The system (200) according to any of claims 1-3, wherein the model simulation device (202) is arranged to simulate ideal operating conditions for the simulated model of the marine vessel (100) when applying the control signals to the simulated model of the marine vessel (100).

5. The system (200) according to claim 4, wherein the simulated ideal operating conditions for the marine vessel (100) comprise that the marine vessel (100) is simulated as not subjected to any wind, waves or sea drift.

6. The system (200) according to any of claims 1-5, where, in case no control signals in response to manual control inputs from an operator of the marine vessel (100) to the model simulation device (202) is provided, the model simulation device (202) is arranged to simulate the model of a marine vessel (100) assuming the rate of change of the position and heading for the simulated model of the marine vessel (100) is null.

7. The system (200) according to any of claims 1-6, wherein the control unit (203) is arranged to further operate in a first or second additional operating modes, and the steering control device (201) comprise a control device arranged to switch the control unit (203) from operating in different operating modes.

8. The system (200) according to claim 7, where, in a first additional operating mode, the control unit (203) is arranged to receive the control signals from the steering control device (201) and control the propulsion or drive system (120) of the marine vessel (100) based on the received control signals.

9. The system (200) according to claim 7 or 8, where, in a second additional operating mode, the control unit (203) is arranged to control the propulsion or drive system (120) of the marine vessel (100) based on a difference between a desired set position and heading, and their respective rate of change, of the marine vessel (100) and a real-time current position and heading, and their respective rate of change, of the marine vessel (100).

10. The system (200) according to any of claims 1-9, wherein the steering control device (201) comprise a main control device (131a) and a secondary control device (131b), wherein the secondary control device (131b) is arranged to receive manual control inputs from an operator of the marine vessel (100).

11. The system (200) according to claim 10, wherein the secondary control device (131b) comprise one or more joysticks (600).

12. The system (200) according to any of claims 1-11, wherein said control signals indicate a movement in an x-direction equal to a force in x (*fₓ*), a movement in a y-direction equal to a force in y (*f_{y}*), and a movement about z-direction equal to a moment in z (*m_{z}*).

13. A method in a system (200) for steering control stabilization of a marine vessel (100), the system (200) comprising a steering control device (201), a control unit (203) and a model simulation device (202), the method comprising:
providing (S1), by the steering control device (201), control signals in response to manual control inputs from an operator of the marine vessel (100) to the model simulation device (202);
applying (S2), by the model simulation device (202), the control signals generated by the steering control device (201) to a simulated model of a marine vessel (100);
providing (S3), by the model simulation device (202), a resulting position and heading, and their respective rate of change, of the simulated model of the marine vessel (100) to the control unit (203); and
controlling (S4), by the control unit (203), a propulsion or drive system (120) of the marine vessel (100) based on a difference between a real-time current position and heading, and their respective rate of change, of the marine vessel (100) and the resulting position and heading, and their respective rate of change, of the simulated model of the marine vessel (100) provided by the model simulation device (202).

14. A method according to claim 13, further comprising, when no control signals is provided to the model simulation device (202), simulating, by the model simulation device (202), the marine vessel (100) assuming the rate of change of the position and heading for the simulated model of the marine vessel (100) is null.

15. A method according to any of claims 13-14, wherein said control signals indicate a movement in an x-direction equal to a force in x (*fₓ*), a movement in a y-direction equal to a force in y (*f_{y}*), and a movement about z-direction equal to a moment in z (*m_{z}*).

16. A computer program product comprising program code for performing, when executed by processing circuitry of the system (200), the method of any of claims 13-14 or claim 15.

17. A non-transitory computer-readable storage medium comprising instructions, which when executed by the processing circuitry, cause the processing circuitry to perform the method of any of claims13-14 or claim 15.

18. A marine vessel (100) comprising a system (200) according to any of claims 1-11 or claim 12.

## Patentansprüche

1. System (200) zur Manövriersteuerstabilisierung eines Wasserfahrzeugs (100), wobei das System (200) eine Manövriersteuervorrichtung (201), eine Modellsimulationsvorrichtung (202) und eine Steuereinheit (203) umfasst,
wobei die Manövriersteuervorrichtung (201) dazu ausgelegt ist, Steuersignale als Reaktion auf manuelle Steuereingaben eines Bedieners des Wasserfahrzeugs (100) an die Modellsimulationsvorrichtung (202) bereitzustellen,
**dadurch gekennzeichnet, dass** die Modellsimulationsvorrichtung (202) dazu ausgelegt ist, die von der Manövriersteuervorrichtung (201) erzeugten Steuersignale auf ein simuliertes Modell eines Wasserfahrzeugs (100) anzuwenden und eine resultierende Position und Kursrichtung sowie deren jeweilige Änderungsrate des simulierten Modells des Wasserfahrzeugs (100) an die Steuereinheit (203) bereitzustellen,
wobei die Steuereinheit (203) dazu ausgelegt ist, ein Antriebssystem (120) des Wasserfahrzeugs (100) auf der Grundlage einer Differenz zwischen einer aktuellen Echtzeit-Position und Kursrichtung sowie deren jeweiliger Änderungsrate des Wasserfahrzeugs (100) und der resultierenden Position und Kursrichtung sowie deren jeweiliger Änderungsrate des simulierten Modells des Wasserfahrzeugs (100), die von der Modellsimulationsvorrichtung (202) bereitgestellt wird, zu steuern.

2. System (200) nach Anspruch 1, wobei die Modellsimulationsvorrichtung (202) dazu ausgelegt ist, die aktuelle Echtzeit-Position und Kursrichtung sowie deren jeweilige Änderungsrate des Wasserfahrzeugs (100) als Eingabe zu verwenden, wenn nachfolgende Steuersignale auf das simulierte Modell des Wasserfahrzeugs (100) angewendet werden.

3. System (200) nach Anspruch 1 oder 2, wobei die Modellsimulationsvorrichtung (202) dazu ausgelegt ist, die resultierende Position und Kursrichtung sowie deren jeweilige Änderungsrate des simulierten Modells des Wasserfahrzeugs (100) als Eingabe zu verwenden, wenn nachfolgende Steuersignale auf das simulierte Modell des Wasserfahrzeugs (100) angewendet werden.

4. System (200) nach einem der Ansprüche 1 bis 3, wobei die Modellsimulationsvorrichtung (202) dazu ausgelegt ist, ideale Betriebsbedingungen für das simulierte Modell des Wasserfahrzeugs (100) zu simulieren, wenn die Steuersignale auf das simulierte Modell des Wasserfahrzeugs (100) angewendet werden.

5. System (200) nach Anspruch 4, wobei die simulierten idealen Betriebsbedingungen für das Wasserfahrzeug (100) umfassen, dass das Wasserfahrzeug (100) als keinem Wind, keinen Wellen und keiner Meeresströmung ausgesetzt simuliert wird.

6. System (200) nach einem der Ansprüche 1 bis 5, wobei, wenn Steuersignale als Reaktion auf manuelle Steuereingaben eines Bedieners des Wasserfahrzeugs (100) an die Modellsimulationsvorrichtung (202) bereitgestellt werden, die Modellsimulationsvorrichtung (202) dazu ausgelegt ist, das Modell eines Wasserfahrzeugs (100) unter der Annahme zu simulieren, dass die Änderungsrate der Position und Kursrichtung für das simulierte Modell des Wasserfahrzeugs (100) null ist.

7. System (200) nach einem der Ansprüche 1 bis 6, wobei die Steuereinheit (203) dazu ausgelegt ist, ferner in einem ersten oder zweiten zusätzlichen Betriebsmodus betrieben zu werden, und die Manövriersteuervorrichtung (201) eine Steuervorrichtung umfasst, die dazu ausgelegt ist, die Steuereinheit (203) vom Betrieb in verschiedenen Betriebsmodi umzuschalten.

8. System (200) nach Anspruch 7, wobei die Steuereinheit (203) in einem ersten zusätzlichen Betriebsmodus dazu ausgelegt ist, die Steuersignale von der Manövriersteuervorrichtung (201) zu empfangen und das Antriebssystem (120) des Wasserfahrzeugs (100) auf der Grundlage der empfangenen Steuersignale zu steuern.

9. System (200) nach Anspruch 7 oder 8, wobei die Steuereinheit (203) in einem zweiten zusätzlichen Betriebsmodus dazu ausgelegt ist, das Antriebssystem (120) des Wasserfahrzeugs (100) auf der Grundlage einer Differenz zwischen einer gewünschten Sollposition und Kursrichtung sowie deren jeweiliger Änderungsrate des Wasserfahrzeugs (100) und einer aktuellen Echtzeit-Position und Kursrichtung sowie deren jeweiliger Änderungsrate des Wasserfahrzeugs (100) zu steuern.

10. System (200) nach einem der Ansprüche 1 bis 9, wobei die Manövriersteuervorrichtung (201) eine Hauptsteuervorrichtung (131a) und eine Sekundärsteuervorrichtung (131b) umfasst, wobei die Sekundärsteuervorrichtung (131b) dazu ausgelegt ist, manuelle Steuereingaben eines Bedieners des Wasserfahrzeugs (100) zu empfangen.

11. System (200) nach Anspruch 10, wobei die Sekundärsteuervorrichtung (131b) einen oder mehrere Joysticks (600) umfasst.

12. System (200) nach einem der Ansprüche 1 bis 11, wobei die Steuersignale eine Bewegung in einer x-Richtung gleich einer Kraft in x (*fₓ*), eine Bewegung in einer γ-Richtung gleich einer Kraft in γ (*f_{y}*) und eine Bewegung um die z-Richtung gleich einem Moment in z (*m_{z}*) anzeigen.

13. Verfahren in einem System (200) zur Manöviersteuerstabilisierung eines Wasserfahrzeugs (100), wobei das System (200) eine Manövriersteuervorrichtung (201), eine Steuereinheit (203) und eine Modellsimulationsvorrichtung (202) umfasst, wobei das Verfahren umfasst:
Bereitstellen (S1) von Steuersignalen als Reaktion auf manuelle Steuereingaben eines Bedieners des Wasserfahrzeugs (100) an die Modellsimulationsvorrichtung (202) durch die Manövriersteuervorrichtung (201);
Anwenden (S2) der von der Manövriersteuervorrichtung (201) erzeugten Steuersignale durch die Modellsimulationsvorrichtung (202) auf ein simuliertes Modell eines Wasserfahrzeugs (100);
Bereitstellen (S3) einer resultierenden Position und Kursrichtung sowie deren jeweiliger Änderungsrate des simulierten Modells des Wasserfahrzeugs (100) durch die Modellsimulationsvorrichtung (202) an die Steuereinheit (203); und
Steuern (S4) eines Antriebssystems (120) des Wasserfahrzeugs (100) durch die Steuereinheit (203) auf der Grundlage einer Differenz zwischen einer aktuellen Echtzeit-Position und Kursrichtung sowie deren jeweiliger Änderungsrate des Wasserfahrzeugs (100) und der resultierenden Position und Kursrichtung sowie deren jeweiliger Änderungsrate des simulierten Modells des Wasserfahrzeugs (100), die von der Modellsimulationsvorrichtung (202) bereitgestellt wird.

14. Verfahren nach Anspruch 13, ferner umfassend, wenn keine Steuersignale an die Modellsimulationsvorrichtung (202) bereitgestellt werden, Simulieren des Wasserfahrzeugs (100) durch die Modellsimulationsvorrichtung (202) unter der Annahme, dass die Änderungsrate der Position und Kursrichtung für das simulierte Modell des Wasserfahrzeugs (100) null ist.

15. Verfahren nach einem der Ansprüche 13 bis 14, wobei die Steuersignale eine Bewegung in einer x-Richtung gleich einer Kraft in x (*fₓ*), eine Bewegung in einer γ-Richtung gleich einer Kraft in γ (*f_{y}*) und eine Bewegung um die z-Richtung gleich einem Moment in z (*m_{z}*) anzeigen.

16. Computerprogrammprodukt, das Programmcode zur Ausführung des Verfahrens nach einem der Ansprüche 13 bis 14 oder Anspruch 15 umfasst, wenn es durch die Verarbeitungsschaltung des Systems (200) ausgeführt wird.

17. Nichtflüchtiges computerlesbares Speichermedium, das Anweisungen umfasst, die, wenn sie durch die Verarbeitungsschaltung ausgeführt werden, die Verarbeitungsschaltung veranlassen, das Verfahren nach einem der Ansprüche 13 bis 14 oder Anspruch 15 durchzuführen.

18. Wasserfahrzeug (100), das ein System (200) nach einem der Ansprüche 1 bis 11 oder Anspruch 12 umfasst.

## Revendications

1. Système (200) pour la stabilisation de commande de direction d'un navire de surface (100), le système (200) comprenant un dispositif de commande de direction (201), un dispositif de simulation de modèle (202) et une unité de commande (203),
dans lequel le dispositif de commande de direction (201) est agencé pour fournir des signaux de commande en réponse à des entrées de commande manuelles provenant d'un opérateur du navire de surface (100) au dispositif de simulation de modèle (202),
**caractérisé en ce que** le dispositif de simulation de modèle (202) est agencé pour appliquer les signaux de commande générés par le dispositif de commande de direction (201) à un modèle simulé d'un navire de surface (100) et fournir une position et un cap résultants, et leur vitesse de changement respective, du modèle simulé du navire de surface (100) à l'unité de commande (203),
dans lequel l'unité de commande (203) est agencée pour commander un système de propulsion ou d'entraînement (120) du navire de surface (100) sur la base d'une différence entre une position et un cap actuels en temps réel, et leur vitesse de changement respective, du navire de surface (100) et la position et le cap résultants, et leur vitesse de changement respective, du modèle simulé du navire de surface (100) fournis par le dispositif de simulation de modèle (202).

2. Système (200) selon la revendication 1, dans lequel le dispositif de simulation de modèle (202) est agencé pour utiliser la position et le cap actuels en temps réel, et leur vitesse de changement respective, du navire de surface (100) en tant qu'entrée lors de l'application de signaux de commande ultérieurs au modèle simulé du navire de surface (100).

3. Système (200) selon la revendication 1 ou 2, dans lequel le dispositif de simulation de modèle (202) est agencé pour utiliser la position et le cap résultants, et leur vitesse de changement respective, du modèle simulé du navire de surface (100) en tant qu'entrée lors de l'application de signaux de commande ultérieurs au modèle simulé du navire de surface (100).

4. Système (200) selon l'une quelconque des revendications 1 à 3, dans lequel le dispositif de simulation de modèle (202) est agencé pour simuler des conditions de fonctionnement idéales pour le modèle simulé du navire de surface (100) lors de l'application des signaux de commande au modèle simulé du navire de surface (100).

5. Système (200) selon la revendication 4, dans lequel les conditions de fonctionnement idéales simulées pour le navire de surface (100) comprennent le fait que le navire de surface (100) est simulé comme n'étant soumis à aucun vent, vagues ou dérive de la mer.

6. Système (200) selon l'une quelconque des revendications 1 à 5, dans lequel, au cas où aucun signal de commande en réponse à des entrées de commande manuelles provenant d'un opérateur du navire de surface (100) au dispositif de simulation de modèle (202) n'est fourni, le dispositif de simulation de modèle (202) est agencé pour simuler le modèle d'un navire de surface (100) en supposant que la vitesse de changement de la position et du cap pour le modèle simulé du navire de surface (100) est nulle.

7. Système (200) selon l'une quelconque des revendications 1 à 6, dans lequel l'unité de commande (203) est agencée pour fonctionner en outre dans un premier ou un second mode de fonctionnement supplémentaire, et le dispositif de commande de direction (201) comprend un dispositif de commande agencé pour commuter l'unité de commande (203) à partir d'un fonctionnement dans différents modes de fonctionnement.

8. Système (200) selon la revendication 7, dans lequel, dans un premier mode de fonctionnement supplémentaire, l'unité de commande (203) est agencée pour recevoir les signaux de commande provenant du dispositif de commande de direction (201) et commander le système de propulsion ou d'entraînement (120) du navire de surface (100) sur la base des signaux de commande reçus.

9. Système (200) selon la revendication 7 ou 8, dans lequel, dans un second mode de fonctionnement supplémentaire, l'unité de commande (203) est agencée pour commander le système de propulsion ou d'entraînement (120) du navire de surface (100) sur la base d'une différence entre une position et un cap de consigne souhaités, et leur vitesse de changement respective, du navire de surface (100) et une position et un cap actuels en temps réel, et leur vitesse de changement respective, du navire de surface (100).

10. Système (200) selon l'une quelconque des revendications 1 à 9, dans lequel le dispositif de commande de direction (201) comprend un dispositif de commande principal (131a) et un dispositif de commande secondaire (131b), dans lequel le dispositif de commande secondaire (131b) est agencé pour recevoir des entrées de commande manuelles provenant d'un opérateur du navire de surface (100).

11. Système (200) selon la revendication 10, dans lequel le dispositif de commande secondaire (131b) comprend une ou plusieurs manettes de commande (600).

12. Système (200) selon l'une quelconque des revendications 1 à 11, dans lequel lesdits signaux de commande indiquent un mouvement dans une direction x égal à une force en x (*fₓ*), un mouvement dans une direction γ égal à une force en γ (*f_{y}*), et un mouvement autour de l'axe z égal à un moment en z (*m_{z}*).

13. Procédé dans un système (200) pour la stabilisation de commande de direction d'un navire de surface (100), le système (200) comprenant un dispositif de commande de direction (201), une unité de commande (203) et un dispositif de simulation de modèle (202), le procédé comprenant :
la fourniture (S1), par le dispositif de commande de direction (201), de signaux de commande en réponse à des entrées de commande manuelles provenant d'un opérateur du navire de surface (100) au dispositif de simulation de modèle (202) ;
l'application (S2), par le dispositif de simulation de modèle (202), des signaux de commande générés par le dispositif de commande de direction (201) à un modèle simulé d'un navire de surface (100) ;
la fourniture (S3), par le dispositif de simulation de modèle (202), d'une position et d'un cap résultants, et de leur vitesse de changement respective, du modèle simulé du navire de surface (100) à l'unité de commande (203) ; et
la commande (S4), par l'unité de commande (203), d'un système de propulsion ou d'entraînement (120) du navire de surface (100) sur la base d'une différence entre une position et un cap actuels en temps réel, et leur vitesse de changement respective, du navire de surface (100) et la position et le cap résultants, et leur vitesse de changement respective, du modèle simulé du navire de surface (100) fournis par le dispositif de simulation de modèle (202).

14. Procédé selon la revendication 13, comprenant en outre, lorsqu'aucun signal de commande n'est fourni au dispositif de simulation de modèle (202), la simulation, par le dispositif de simulation de modèle (202), du navire de surface (100) en supposant que la vitesse de changement de la position et du cap pour le modèle simulé du navire de surface (100) est nulle.

15. Procédé selon l'une quelconque des revendications 13 et 14, dans lequel lesdits signaux de commande indiquent un mouvement dans une direction x égal à une force en x (*fₓ*), un mouvement dans une direction γ égal à une force en γ (*f_{y}*), et un mouvement autour de l'axe z égal à un moment en z (*m_{z}*).

16. Produit de programme informatique comprenant un code de programme pour réaliser, lorsqu'il est exécuté par un circuit de traitement du système (200), le procédé selon l'une quelconque des revendications 13 et 14 ou la revendication 15.

17. Support de stockage non transitoire lisible par ordinateur comprenant des instructions qui, lorsqu'elles sont exécutées par le circuit de traitement, amènent le circuit de traitement à réaliser le procédé selon l'une quelconque des revendications 13 et 14 ou la revendication 15.

18. Navire de surface (100) comprenant un système (200) selon l'une quelconque des revendications 1 à 11 ou la revendication 12.
